Europäisches Patentamt

European Patent Office

Office européen des brevets

(11) Publication number: **0 043 213**
**B1**

## EUROPEAN PATENT SPECIFICATION

(45) Date of publication of patent specification: **30.04.86**

(51) Int. Cl.⁴: **B 62 L 3/02**

(21) Application number: **81302765.3**

(22) Date of filing: **19.06.81**

(54) **Control lever for cycle.**

(30) Priority: **25.06.80 JP 89767/80 u**
**08.08.80 JP 112888/80 u**

(43) Date of publication of application:
**06.01.82 Bulletin 82/01**

(45) Publication of the grant of the patent:
**30.04.86 Bulletin 86/18**

(84) Designated Contracting States:
**BE DE FR GB IT**

(56) References cited:
**EP-A-0 051 973**
**FR-A-1 298 725**
**FR-A-1 539 632**
**GB-A-2 028 411**

(73) Proprietor: **SHIMANO INDUSTRIAL COMPANY**
**LIMITED**
**77, 3-cho Oimatsu-cho Sakai-shi**
**Osaka (JP)**

(72) Inventor: **Keizo, Shimano**
**81, 3-cho Midorigaoka-Minamimachi**
**Sakai-shi Osaka (JP)**

(74) Representative: **Szczuka, Jan Tymoteusz et al**
**Cruikshank & Fairweather 19 Royal Exchange**
**Square**
**Glasgow G1 3AE Scotland (GB)**

Courier Press, Leamington Spa, England.

## Description

This invention relates to a control lever system for a cycle and mountable on the handlebars thereof which system comprises a bracket member having a fixing means for securing thereof to said handlebars, said bracket member having a front wall, side walls, and a rear wall and having a generally hollow form with an opening at its rear side; a pivotally mounted control lever having a boss and a grip portion, said boss of said control lever geing disposed in said bracket member and said grip portion extending outwardly from said opening in said bracket member, said boss having in the region of its free end a control wire retainer, said bracket and control lever being formed and arranged so that said control lever grip portion extends generally alongside an opposed part of said handlebars; and an adjuster having a contact portion for abutment with a part of said control lever for limiting pivotal movement thereof and a control portion for use in adjusting the position of said adjuster relative to said bracket thereby to adjust a grip spacing between the control lever grip portion and said opposed part of said handlebars.

In general, control lever systems for use in operating brakes or other mechanisms provided on cycles are mounted on the handlebars, whether of flat type or drop type, in the vicinity of grip portions of said handlebars. In the case of drop-type handlebars mounting is normally on the cranked arcuate portions of the handlebars.

The control lever system, in particular in the case of drop-type handlebars, is operated in such a manner that a driver retains his finger on the grip portion of the control lever whilst gripping with his palm the cranked portion of the handlebars or the bracket member mounting of the control lever system and swinging the brake lever around its pivot point thereby to actuate the mechanism e.g. brake, controlled thereby.

There is however a considerable variation in finger length among bycycle riders due to various factors such as sex, age and individual variation so that the optimum spacing between the handlebar and the gripping portion of the brake lever (hereinafter referred to as the grip spacing for convenience) is also subject to a corresponding variation.

In conventional brake lever systems the bracket member has a threaded bore in its front wall, and an adjustment bolt is screw-threadedly engaged therein to abut at its tip a boss on the brake lever, the bolt being screwed in or out to adjust the grip dimension.

In such systems, the bolt projects at its head from the front wall of the bracket member giving rise to the following problem — especially when the bracket is mounted on the cranked portion of a drop-type handlebars.

When a rider rides a cycle with the drop-type handlebars at medium speed with his hands on the handlebars gripping the bracket member the projecting head of the adjusting bolt tends to catch in his palms, which can be rather dangerous. Also, air resistance against the cycle's running is increased depending on the extent to which the bolt head projects.

The adjusting bolt, however, has to be mounted on the front wall of the bracket member due to the fact that the lever, in a conventional brake lever system is pivotally connected to the bracket member side walls in proximity to their edges which are mounted on the handlebars. In more detail, with the control lever biased unidirectionally by a return spring provided in the mechanism controlled by the lever, for example in a brake mechanism, the grip spacing can be limited by abutment of part of the control lever against the adjuster under the influence of said return spring. The adjuster needs therefore to be provided in the path of the return movement of the control lever under the influence of the return spring. Since, however, the control lever in a conventional system is pivotally connected to the bracket member in proximity to its side which is mounted on the handlebars, when the adjuster is provided on the bracket member, the mounting position of the adjuster is limited to the front wall of the bracket member in order for it to be disposed in the path of the control lever return movement.

As the adjusting bolt requires a range of positional adjustment, and the bracket member, which is usually made from metallic plate, is of only limited thickness, the adjuster inevitably projects outwardly from the front wall of said bracket.

It is possible to reduce the danger of injury by using an adjusting bolt with a rounded head. This does not however avoid the projection of the bolt head into the rider's palm and the discomfort arising therefrom which in turn will tend to contribute to increased rider fatigue and possibly reduced control by the rider.

FR—A—1 298 725 discloses a control lever system in which the control lever is mounted on a raised portion extending from inside the bracket. The system does not, however, provide any means at all for adjusting the grip spacing between the control lever and the gripping portion of the handlebars.

It is an object of the present invention to avoid or minimize one or more of the above disadvantages.

The present invention provides a control lever system for a cycle and mountable on the handlebars thereof which system comprises a bracket member having a fixing means for securing thereof to said handlebars, said bracket member having a front wall, side walls and a rear wall and having a generally hollow form with an opening at its rear side; a pivotally mounted control lever having a boss and a grip portion, said boss of said control lever being disposed in said bracket member and said grip portion extending outwardly from said opening in said bracket member, said boss having in the region of its free end a control wire retainer, said bracket and control lever being formed and arranged so that said control lever grip portion extends generally alongside an opposed part of said handlebars; and an adjuster having a contact portion for abutment with a part of said control lever for limiting pivotal movement thereof and a control portion for use in adjusting the position of said adjuster relative to said bracket, thereby to adjust a grip spacing between the control lever grip portion and said opposed part of said handlebars characterized in that said system includes a raised portion extending from inside said bracket member in a direction towards said opening in said bracket member, in that said control lever is pivotally connected to said raised portion, and in that said adjuster is mounted on said raised portion.

The raised portion may be formed integrally with the bracket member, but is preferably provided on a separately formed adaptor. Since the control lever is pivotally supported on the adaptor the adjuster is disposable on the raised portion without projecting outwardly from the front wall of the bracket member in contrast to the above described conventional system. Accordingly even when a rider is gripping the bracket member during riding of the cycle, he is not exposed to the risk of injury or discomfort from the above described source, is not subjected to added fatigue from this source and is thus able to maintain better steering control.

Also, with the control lever pivotally connected to the raised portion it is possible for the adjuster to be mounted in different positions on said raised portion thereby providing increased freedom of design of the control lever system.

In a preferred aspect of the present invention the control wire support means includes a retaining bore for receiving and holding, in use, the retainer head of the control wire, a wire-receiving bore for receiving said control wire therethrough, said wire-receiving bore being smaller in diameter than said retaining bore and said retainer head; and said bracket member having support means for an outer stop for the outer sheath of a said control wire, and said control wire sheath support means being formed and arranged for supporting said outer sheath stop so that said control wire outer sheath and said control wire therein can extend within said bracket member substantially directly towards the bottom of said bracket member at which said bracket member is secured to said handlebar so that when said device is secured, in use, to an arcuate handlebar portion, said control wire and sheath can extend from the interior of the bracket member directly into the interior of the handlebar without any abrupt change of direction therealong, said control wire sheath support means having a through bore in said sheath support means through which the control wire extends from the outer shop of the sheath towards said control lever, said through bore being larger in diameter than the control wire retainer head.

Further preferred features and advantages of the invention will appear from the following description given by way of example of some preferred embodiments illustrated with reference to the accompanying drawings in which:

Fig. 1 is a sectional view of a first brake control lever system of the invention in a plane extending generally longitudinally of the lever and an adjacent part of the handlebars;

Fig. 2 is a transverse sectional view of a brake control lever system;

Fig. 3 is a perspective view of an adapter for the above brake control lever system;

Fig. 4 is a perspective view of a control wire retainer for use in the above control lever system;

Fig. 5 is a front elevation of a fixing means for use in the system shown in Fig. 1; and

Fig. 6 is a sectional view corresponding to Fig. 1 of a second brake control lever system.

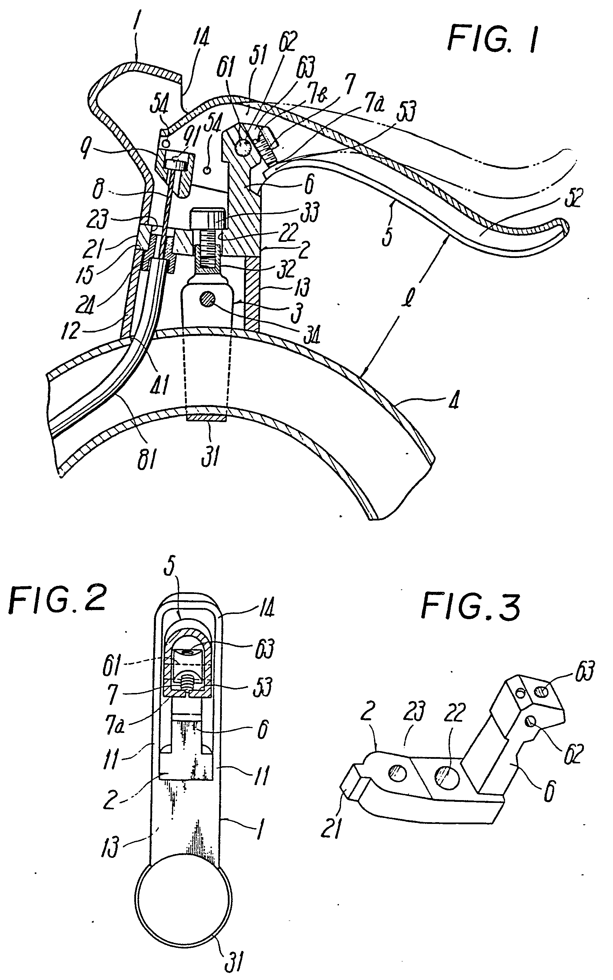

Fig. 1 shows a brake control lever system for use on a drop-style handlebars 4 and comprises a generally box-shaped bracket member 1, an adapter 2, a fixing means 3 for securing the bracket member 1 to the handlebars 4, and a control lever 5.

The bracket member 1 comprises a pair of opposed side walls 11, and a front wall 12 and a rear wall 13 interconnecting said side walls 11, the rear wall 13 being smaller in height than the front wall 12 to provide an opening 14 to the rear of the bracket member 1. The front wall 12 has at a position approximately level with the upper end of the rear wall 13 a bore 15 for retaining therein a retaining nose 21 of the adapter 2.

The adapter 2 is disposed to extend generally longitudinally inside the bracket member 1, extending from the front wall 12 to the rear wall 13, and being provided at one end adjacent the rear wall 13 with a rising support portion 6, referred to herein as a raised portion.

In detail, the adapter 2 is, as shown in Figs. 1 and 3, generally L-shaped and has at its front end (adjacent the front bracket wall 12) said retaining nose 21. The nose 21 locates in the bore 15 in the front bracket wall 12 and the rear end of the adapter 2 engages the upper end of the rear wall 13, so that the adapter 2 extends across the front rear walls 12, 13. The adapter 2 is also provided with a generally centrally disposed bore 22 for receiving therethrough a mounting bolt 33 of the fixing means 3, and a further bore 23 between said central bore 22 and the nose 21 for locating therein a support 24 for the outer sheath or guide 81 of a control cable (further described hereinbelow).

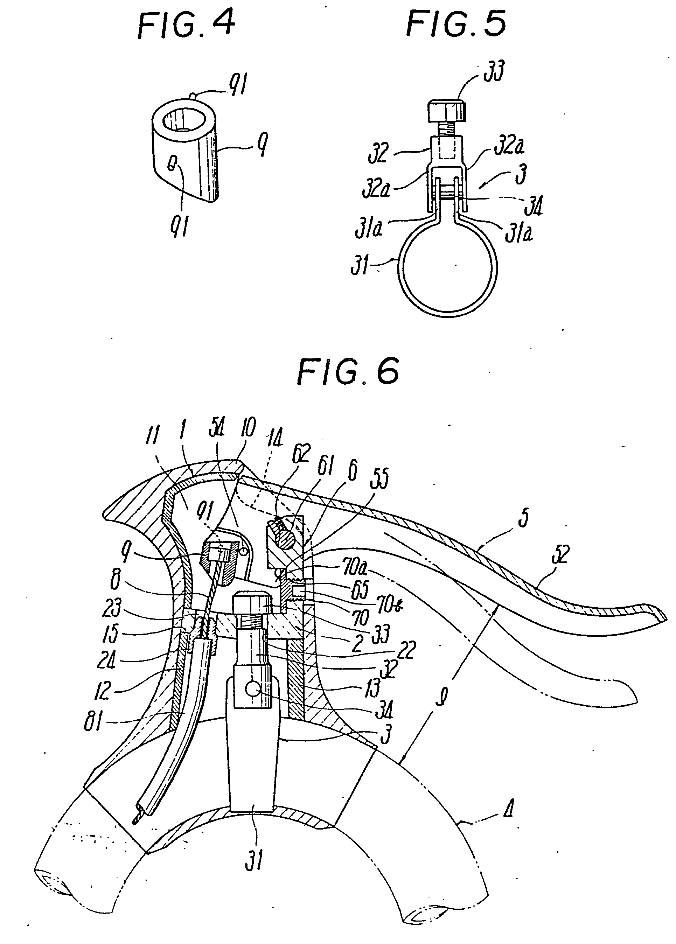

The fixing means 3 securing the bracket member 1 to the handlebars 4 with the aid of the adapter 2 will now be described in further detail. As shown in Fig. 5 the fixing means 3 comprises an annular clamping band 31 having at both ends thereof lugs 31a, a tubular mounting nut 32 having a pair of legs 32a, and the mounting bolt 33. The band 31 is disposed around the handlebars 4 concentrically therewith, the lugs 31a are located between the legs 32a, the legs 32a are interconnected by a pin 34, and the bolt 33 is inserted into the central bore 22 and screw-threadedly engaged with the nut 32, to secure the bracket member 1 to the handlebars 4 whilst simultaneously securing the adapter 2 to the bracket member 1.

The control lever 5, as shown in Fig. 1, comprises a boss 51 and a grip 52 and is formed of metallic plate formed, conveniently in a press or the like, the boss 51 having an inverted generally U— or C—shaped form in transverse cross-section and the grip 52 having a substantially closed, generally box-shaped form in transverse cross-section as shown in Fig. 2. The control lever 5 mounted with its boss 51 extending into the bracket member 1 through the opening 14 thereof, the boss 51 being pivotally connected to the upper part of the raised portion 6 of the adapter 2 via a control lever pivot shaft 61 which extends through a shaft bore 62 provided in the raised portion 6 as shown in Fig. 3.

In the top of the raised portion 6 is provided a threaded bore 63 which extends approximately at right angles to the shaft bore 62 down into said raised portion 6, in other words, in the plane of pivotal movement of the control lever 5, for screw-threaded engagement in said threaded bore 63 of an adjusting bolt or adjuster 7 which is provided with a contact portion 7a and a control portion 7b. The grip 52 is provided at its root adjacent to boss 51 with a stop means 53 opposite the raised portion 6, so that the contact portion 7a of the adjuster abuts the stop means 53 to limit pivotal movement of the control lever 5 away from the handlebars 4. The stop means 53 in Fig. 1 is conveniently provided by the inwardly cranked portions of the closed-box-shape of the grip 52 as shown in Fig. 2.

A retainer 9 for the control wire 8 is pivotally connected to the free end of the boss 51 of the control lever 5 mounted in said bracket member 1 via a pair of pivot pins 91, the pivot pins 91 projecting outwardly of the outer surface of the retainer 9. as shown in Fig. 4.

As referred to above, the control wire guide 81 comprising an outer sheath for the control wire 8 of the control cable is supported by the support 24 located in the further bore 23 of the adapter 2, and extends through an aperture 41 in the handlebars 4 into the interior of the latter. Pins 54 are provided inside the boss 51 of the control lever 5 and are disposed to limit the range of pivotal movement of the retainer 9.

With a control lever system of the invention as described above the grip dimension, i.e., the spacing *l* between the grip 52 and the handlebars 4 can be readily adjusted by simply screwing the adjusting bolt 7 in or out until an optimum spacing corresponding to a particular rider's hand is obtained. Specifically the adjusting bolt 7 is screwed in to displace the stop means 53 of the control lever 5, and hence the grip 52 thereof towards handlebar 4 to reduce the grip spacing *l*. When the adjusting bolt 7 is screwed out (i.e. unscrewed partially) the stop means 53 is freed to move away, the grip 52 also moving a corresponding distance away from the handlebars 4 to increase the grip spacing *l* as indicated by the phantom line position of the control lever 5 in Fig. 1.

When the grip 52 is moved, the control wire retainer 9 pivotally mounted in the boss 51 always keeps the control wire 8 substantially straight with respect to the sheath 81 supported by the adapter 2 via the support 24, so that the control lever 5 maintains its normal mode of operation irrespective of the size of the grip spacing *l*.

As will be apparent from the above, the control lever system of the invention affords ready adjustability of the grip spacing without the use of any outwardly projecting adjusters, the adjuster being instead housed inside the bracket member so that air resistance during running of the cycle is reduced at the same time as the possibility of injury to rider's palm by catching thereof on an adjuster is avoided.

In the case of the above described embodiment it is of course not possible to adjust the adjusting bolt 7 without removing the control lever 5 from the adapter 2 due to the fact that the adjusting bolt 7 is held in the threaded bore 63 in the top of the raised portion 6 at the underside of the control lever 5. This difficulty can however be overcome in a modified form of construction as shown in Fig. 6 wherein adjustment can be readily effected from the outside of the bracket member 1.

In the control lever system of Fig. 6, a threaded through bore 65 is provided in the region of the root of the raised portion 6, and an adjuster 70 having an abutment portion 70a and a control portion 70b, is screw-threadedly engaged in said bore 65 from the inwardly facing side of the raised portion 6. The boss 51 of the control lever 5 is provided with a stop means 55 opposite said inwardly facing side of the raised portion 6 and the control portion 70b is accessible from the outwardly facing side of the adapter 2, thereby making the adjuster 70 controllable from outside the bracket member without the need for removal of the control lever 5.

The adjuster 70 comprises a screw-threaded bolt having a head disposed on the inwardly facing side of the raised portion 6 which head provides said contact portion 70a and a hexagonal recess engagable by an Allan Key or other like tool and constituting the control portion 70b.

The contact portion 70a of adjuster 70 is disposed opposite the head of the mounting bolt 33, so that a gap between the opposed heads of the adjuster 70 and bolt 33, is smaller than the axial length of screw thread of the adjuster 70 to prevent escape of the adjuster 70 from the threaded bore 65.

In the case of the embodiment of Fig. 6, the bracket member 1 is provided with a bracket cover 10 of a soft material, to provide a more comfortable and secure grip, said cover extending around the outer surfaces of side walls 11, front wall 12 and rear wall 13, of the bracket member 1.

As will be apparent from the above, the control portion 70b of the adjuster 70 in this embodiment is operable from the outside of the bracket member 1, so that the grip spacing *l* is readily changeable from the outside of said bracket member 1. Since the adjuster 70 is housed within bracket member 1, there is no danger of a rider catching his palm on the adjuster 70 during riding of the cycle thereby contributing to improved safety.

## Claims

1. A control lever system for a cycle and mountable on the handlebars thereof which system comprises a bracket member (1) having a fixing means (3) for securing thereof to said handlebars (4), said bracket member (1) having a front wall (12), side walls (11) and a rear wall (13) and having a generally hollow form with an opening (14) at its rear side (13); a pivotally mounted control lever (5) having a boss (51) and a grip portion (52), said boss (51) of said control lever (5) being disposed in said bracket member (1) and said grip portion (52) extending outwardly from said opening (14) in said bracket member (1), said boss (51) having in the region of its free end a control wire retainer (9), said bracket (1) and control lever (5) being formed and arranged sq that said control lever grip portion (52) extends generally alongside an opposed part of said handlebars (4); and an adjuster (7) having a contact portion (7a) for abutment with a part (53) of said control lever (5) for limiting pivotal movement thereof and a control portion (7b) for use in adjusting the position of said adjuster (7) relative to said bracket (l), thereby to adjust a grip spacing (*l*) between the control lever grip portion (52) and said opposed part of said handlebars (4) characterized in that said system includes a raised portion (6) extending from inside said bracket member (1) in a direction towards said opening (14) in said bracket member (1), in that said control lever (5) is pivotally connected (61) to said raised portion (6), and in that said adjuster (7) is mounted on said raised portion (6).

2. A control lever system according to Claim 1, wherein said raised portion (6) is provided by an adapter (2) formed separately from said bracket member (1).

3. A control lever system according to Claim 2, wherein said adapter (2) is disposed longitudinally of said bracket member (1) extending across said front and rear walls (12, 13) thereof, with said raised (6) disposed in proximity to said rear wall (13) and wherein said adapter (2) is formed and arranged for engagement by said fixing means (3) for said bracket member (1) so that said fixing means is operative to simultaneously secure said adapter (2) to said bracket member (1) and said bracket member (1) to said handlebars (4) in use of the control lever system.

4. A control lever system according to Claim 3, wherein said adapter is provided with a control wire support (24) formed and arranged for guiding, in use of the control lever system, a control wire (8) extending from a control wire retainer (9) provided on said control lever (5), towards said handlebars (4).

5. A control lever system according to Claim 4, wherein said support is in the form of an outer sheath stop (24).

6. A control lever system according to any one of Claims 1 to 5 wherein the control lever (5) is provided with stop means (53) in the region of the root of the grip portion (52) thereof and opposite the top of said raised portion (6), said adjuster (7) being mounted in the top of said raised portion (6).

7. A control lever system according to any one of Claims 1 to 5 wherein the control lever (5) is provided with a stop means (55) on said boss (51) of said control lever (5) and opposite the inwardly facing side of said raised portion (6), said adjuster (7) being mounted with its contact portion (7a) disposed on said inwardly facing side of said raised portion (6) and its control portion (7b) extending through said raised portion (6) so as to be accessible from the outwardly facing side of said raised portion (6) and be operable from the outside of said bracket member (1).

8. A control lever system for a cycle according to any one of the preceding claims wherein said bracket member (1) is provided with an outer cover (10) of a soft material.

9. A control lever system according to any one of Claims 1 to 8 wherein said control wire retainer (9) includes a retaining bore for receiving and holding, in use, the retainer head of the control wire (8), a wire-receiving bore for receiving said control wire (9) therethrough, said wire-receiving bore being smaller in diameter than said retaining bore and said retainer head; and said bracket member (1) having support means (23) for an outer stop (24) for the outer sheath (81) of a said control wire (8), and said control wire sheath support means (23) being formed and arranged for supporting said outer sheath stop (24) so that said control wire outer sheath (81) and said control wire (8) therein can extend within said bracket member (1) substantially directly towards the bottom of said bracket member (1) at which said bracket member is secured to said handlebar (4) so that when said device is secured, in use, to an arcuate handlebar portion (4), said control wire (8) and sheath (81) can extend from the interior of the bracket member directly into the interior of the handlebar (4) without any abrupt change of direction therealong, said control wire sheath support means (23) having a through bore in said sheath support means (23) through which the control wire (8) extends from the outer stop (24) of the sheath (81) towards said control lever (5), said through bore being larger in diameter than the control wire retainer head (91).

10. A control lever system according to Claim 9 when dependent, directly or indirectly, on claim 2 wherein said control wire sheath support means is disposed on said adapter (2).

11. A control lever system according to Claim 10 wherein said adapter is in the form of a member (23) extending laterally from a lower portion of said raised portion (6).

12. A control lever system according to Claim 10 or claim 11 wherein said mounting means (23) is in the form of a generally plate-like member which is inclined upwardly towards a first end adjacent the front wall (12) of said bracket member (1) the upwardly inclined portion being formed for supporting said outer sheath stop (24).

13. A control lever system according to any one of Claims 9 to 12 wherein the front wall (12) of said bracket member (1) has a retaining bore (15) and the rear wall (13) has an opening (14), said mounting means (23) being supported in said bracket member (1) by engagement with said retaining bore (15) and rear wall opening (14) so that tightening of said fixing means (31—33) secures said mounting member (2) in position relative to said front and rear walls (12, 13) whilst clamping said bracket member (1) with said mounting member (2) to the handlebar (4).

14. A control lever system according to any one of Claims 9 to 13 wherein said control wire sheath support means through bore (23) is disposed in proximity to said front wall (12) of the bracket member (1) so that said control wire sheath (81) and control wire (8) extend, in use, along the inner surface of the front wall (12) of said bracket member (1).

15. A control lever system according to any one of Claims 9 to 14 wherein the control wire retainer is provided on a support member (9) mounted on the control lever (5).

16. A control lever system according to Claim 15 wherein said support member (9) is pivotally mounted (91) on the control lever (5).

**Patentansprüche**

1. Betätigungshebelsystem für ein Fahrrad zur Befestigung an dessen Lenkstange mit einem Stüzteil (1) mit Befestigungsmitteln (3) zum Befestigen an der Lenkstange (4), wobei das Stützteil (1) eine Vorderwand (12), Seitenwände (11) und eine Rückwand (13) aufweist und im wesentlichen hohl ist mit einer öffnung (14) in der Rückwand; mit einem schwenkbar befestigten Betätigungshebel (5) mit einem Ausleger (51) und einem Griffteil (52), wobei der Ausleger (51) des Betätigungshebels (5) im Stützteil (1) angeordnet ist und das Griffteil (52) sich von der Öffnung (14) nach außen erstreckt, wobei der Ausleger (51) im Bereich seines freien Endes eine Aufnahme (9) für ein Betätigungskabel aufweist und wobei das Stützteil (1) und der Betätigungshebel (5) so ausgebildet und angeordnet sind, daß sich der Betätigungshebelgriffteil (52) im wesentlichen längs einem gegenüberliegenden Teil der Längsstange (4) erstreckt; und mit einem Einsteller (7) mit einem Kontaktteil (7a) zur Anlage an einem Teil (53) des Betätigungshebels (5) zum Begrenzen von dessen Schwenkbewegung und mit einem Steuerteil (7b) zum Einstellen der Stellung des Einstellers (7) relativ zum Stützteil (1), um dadurch einen Griffabstand (l) zwischen Betätigungshebelgriffteil (52) und gegenüberliegendem Teil der Lenkstange (4) einzustellen, dadurch gekennzeichnet, daß das System einen erhöhten Teil (6) aufweist, der sich von innerhalb des Stutzteils (1) in Richtung auf die Öffnung (14) im Stützteil erstreckt, daß der Betätigungshebel (5) schwenkbar (bei 61) an dem erhöhten Teil (6) befestigt ist und daß der Einsteller (7) am erhöhten Teil (6) befestigt ist.

2. Betätigungshebelsystem nach Anspruch 1, dadurch gekennzeichnet, daß der erhöhte Teil (6) aus einem Adapter (2) besteht, der getrennt vom Stützteil (1) ausgebildet ist.

3. Betätigungshebelsystem nach Anspruch 2, dadurch gekennzeichnet, daß der Adapter (2) in Längsrichtung des Stützteils (1) angeordnet ist und sich durch die Vorder- und Rückwand (12, 13) erstreckt, wobei der erhöhte Teil (6) in der Nähe der Rückwand (13) angeordnet ist, und daß der Adapter (2) augebildet und angeordnet ist für einen Eingriff der Befestigungsmittel (3) für das Stützteil (1), so daß die Befestigungsmittel im Betrieb gleichzeitig den Adapter (2) am Stützteil (1) und das Stützteil (1) an der Lenkstange (4) bei der Benutzung des Betätigungshebelsystems befestigen.

4. Betätigungshebelsystem nach Anspruch 3, dadurch gekennzeichnet, daß der Adapter mit einer Betätigungskabelstütze (24) versehen ist, die angeordnet und ausgebildet ist, um im Betrieb des Betätigungshebelsystems ein Betätigungskabel (8) zu führen, welches sich von der Betätigungskabelaufnahme (9) im Betätigungshebel (5) in Richtung auf die Lenkstange (4) erstreckt.

5. Betätigungshebelsystem nach Anspruch 4, dadurch gekennzeichnet, daß die Stütze die Form eines Außenhüllenanschlags (24) aufweist.

6. Betätigungshebelsystem nach einem der Ansprüche 1 bis 5, dadurch gekennzeichnet, daß der Betätigungshebel (5) mit einer Stop—Vorrichtung (53) versehen ist im Bereich der Wurzel des Griffteils (52) und gegenüber der Spitze des erhöhten Teils (6), wobei der Einsteller (7) in der Spitze des erhöhten Teils (6) befestigt ist.

7. Betätigungshebelsystem nach einem der Ansprüche 1 bis 5, dadurch gekennzeichnet, daß der Betätigungshebel (5) mit einer Stop-Vorrichtung (55) auf dem Ausleger (51) des Betätigungshebels (5) versehen ist gegenüber der nach innen weisenden Seite des erhöhten Teils (6), wobei der Einsteller (7) so befestigt ist, daß sein Kontaktteil (7a) auf der nach innen weisenden Seite des erhöhten Teils (6) angeordnet ist und sein Steuerteil (7b) sich durch den erhöhten Teil (6) erstreckt, um von der nach außen weisenden Seite des erhöhten Teils (6) zugänglich zu sein und von der Außenseite des Stützteils (1) betätigt werden zu können.

8. Betätigungshebelsystem nach einem der vorangehenden Ansprüche, dadurch gekennzeichnet, daß das Stützteil (1) mit einer Außenhülle (10) aus weichem Material versehen ist.

9. Betätigungshebelsystem nach einem der Ansprüche 1 bis 8, dadurch gekennzeichnet, daß die Betätigungskabelaufnahme (9) eine Aufnahmeöffnung zum Aufnehmen und Halten des Aufnahmekopfs des Betätigungskabels (8) im Betrieb aufweist, eine Kabelaufnahmebohrung zum Aufnehmen des Betätigungskabels (9) dadurch, wobei die Kabelaufnahmebohrung schmaler im Durchmasser ist als die Aufnahmebohrung und der Aufnahmekopf; und wobei das Stützteil (1) eine Stützvorrichtung (23) für den Außenanschlag (24) der Außenhülle (81) des Betätigungskabels (8) aufweist und wobei die Betätigungskabelhüllenstützvorrichtung (23) ausgebildet und angeordnet ist zum Abstützen des Außenhüllenanschlags (24), so daß sich die Betätigungskabelaußenhülle (81) und das Betätigungskabel (8) darin im Stützteil (1) im wesentlichen in Richtung auf den Boden des Stützteils (1) erstrecken, an welchem das Stützteil an der Lenkstange (4) befestigt ist, so daß bei der Befestigung des Systems im Betrieb an einem gekrümmten Lenkstangenteil (4) das Betätigungskabel (8) und die Hülle (81) sich vom Inneren des Stützteils direkt in das Innere der Lenkstange (4) erstrecken kann ohne abrupte Änderung der Längsrichtung, wobei die Betätigungskabelhüllenstützvorrichtung (23) eine Durchgangsbohrung in der Hüllenstützvorrichtung (23) aufweist, durch welche sich das Betätigungskabel vom Außenanschlag (24) der Hülle (81) in Richtung auf den Betätigungshebel (5) erstreckt, wobei die Durchgangsbohrung im Durchmesser größer ist als der Betätigungshebelaufnahmekopf (91).

10. Betätigungshebelsystem nach Anspruch 8 bei direktem oder indirektem Rückbezug auf Anspruch 1 oder 2, dadurch gekennzeichnet, daß die Betätigungskabelhüllenstützvorrichtung auf dem Adapter (2) angeordnet ist.

11. Betätigungshebelsystem nach Anspruch 10, dadurch gekennzeichnet, daß der Adapter die Form eines Teils (23) aufweist, welches sich seitlich von einem unteren Teil des erhöhten Teiles (6) erstreckt.

12. Betätigungshebelsystem nach Anspruch 10 oder 11, dadurch gekennzeichnet, daß die Befestigungsvorrichtung (23) die Form eines im wesentlichen plattenförmigen Teils hat, welches nach oben geknickt ist in Richtung auf ein erstes Ende in der Nähe der Vorderwand (12) des Stützteils (1), wobei der nach oben geknickte Teil zum Abstützen des Außenhüllenanschlags (24) ausgebildet ist.

13. Betätigungshebelsystem nach einem der Ansprüche 9 bis 12, dadurch gekennzeichnet, daß die Vorderwand (12) des Stützteils (1) eine Aufnahmebohrung (15) und die Rückwand (13) eine Öffnung (14) aufweist, wobei die Befestigungsvorrichtung (23) im Stützteil (1) durch Eingriff in die Aufnahmebohrung (15) und die Rückwandbohrung (14) befestigt ist, so daß ein Festziehen der Befestigungsmittel (31 bis 33) das Befestigungsteil (2) in seiner Stellung relativ zur Vorder- und Rückwand (12, 13) festlegt, während das Stützteil (1) mit dem Befestigungsteil (2) an der Leknstange (4) festgeklemmt wird.

14. Betätigungshebelsystem nach einem der Ansprüche 9 bis 13, dadurch gekennzeichnet, daß die Durchgangsbohrung (23) der Betätigungskabelhüllenstützvorrichtung in der Nähe der Vorderwand (12) des Stützteils (1) angeordnet ist, so daß die Betätigungskabelhülle (81) und das Betätigungskabel (8) sich im Betrieb entlang der Innenfläche der Vorderwand (12) des Stützteils (1) erstrecken.

15. Betätigungshebelsystem nach einem der Ansprüche 9 bis 14, dadurch gekennzeichnet, daß die Betätigungskabelaufnahme auf einem Stützteil (9) vorgesehen ist, welches am Betätigungshebel (5) befestigt ist.

16. Betätigungshebelsystem nach Anspruch 15, dadurch gekennzeichnet, daß das Stützteil (9) schwenkbar am Betätigungshebel (5) (bei 91) befestigt ist.

**Revendications**

1. Système de levier de commande pour un cycle, montable sur le guidon de ce dernier, ce système comprenant un support (1) muni de moyens de fixation (3) pour l'attacher au guidon (4), ledit support (1) comportant une paroi avant (12), des parois latérales (11) et une paroi arrière (13) et présentant une configuration sensiblement creuse avec une ouverture (14) sur son côté arrière (13); un levier de commande (5) monté de façon pivotante et comportant un renflement (51) et une partie de préhension (52), ledit renflement (51) du levier de commande (5) étant situé dans le support (1) et ladite partie de préhension (52) s'étendant à l'extérieur de ladite ouverture (14) du support (1), ledit renflement (51) comportant dans la région de son extrémité libre un élément (9) de retenue de câble de commande, le support (1) et le levier de commande (5) étant formés et disposés de sorte que la partie de préhension (52) du levier de commande s'étend sensiblement le long d'une partie opposée du guidon (4); et un organe de réglage (7) comportant une partie de contact (7a), que vient en butée avec une partie (53) du levier de commande (5) pour limiter son mouvement pivotant, et une partie de commande (7b) utilisable pour régler la position de l'organe de réglage (7) par rapport au support (1), de manière à régler un écartement de prise (l) entre la partie de préhension (52) du levier de commande et la dite partie opposée du guidon (4), caractérisé en ce que ledit système comprend une partie surélevée (6) s'étendant de l'intérieur du support (1) en direction de l'ouverture (14) du support (1), en ce que le levier de commande (5) est relié de façon pivotante (61) à ladite partie surélevée (6), et en ce que l'organe de réglage (7) est monté sur ladite partie surélevée (6).

2. Système de levier de commande suivant la revendication 1, dans lequel la partie surélevée (6) est procurée par une pièce d'adaptation (2) formée séparément du support (1).

3. Système de levier de commande suivant la revendication 2, dans lequel la pièce d'adaptation (2) est disposée dans la direction longitudinale du support (1) et s'étend de la paroi avant à la paroi arrière (12, 13) du support, ladite partie surélevée (6) étant située près de la paroi arrière (13), et dans lequel la pièce d'adaptation (2) est formée et disposée de manière à être prise par les moyens de fixation (3) du support (1), de sorte que les moyens de fixation agissent pour fixer simultanément la pièce d'adaptation (2) au support (1) et le support (1) au guidon (4), en utilisation du système de levier de commande.

4. Système de levier de commande suivant la revendication 3, dans lequel la pièce d'adaptation comporte un support (24) de câble de commande, formé et disposé pour guider, en utilisation du système de levier de commande, un câble de commande (8) s'étendant d'une pièce de retenue (9) de câble de commande, prévue sur le levier de commande (5), vers le guidon (4).

5. Système de levier de commande suivant la revendication 4, dans lequel ledit support est sous la forme d'une pièce d'arrêt (24) de gaine extérieure.

6. Système de levier de commande suivant l'une quelconque des revendications 1 à 5, dans lequel le levier de commande (5) comporte un élément d'arrêt (53), dans la région de la naissance de sa partie de préhension (52) et en face de la partie supérieure de ladite partie surélevée (6), l'organe de réglage (7) étant monté dans la partie supérieure de la partie surélevée (6).

7. Système de levier de commande suivant l'une quelconque des revendication 1 à 5, dans lequel le levier de commande (5) comporte un élément d'arrêt (55) prévu sur le renflement (51) du levier de commande (5) et en face du côté de la partie surélevée (6) tourné vers l'intérieur, l'organe de réglage (7) étant monté avec sa partie de contact (7a) disposée sur ledit côté de la partie surélevée (6) tourné vers l'intérieur et sa partie de commande (7b) s'étendant à travers la partie surélevée (6) de manière à être accessible du côté de la partie surélevée (6) tourné vers l'extérieur et à être manoeuvrable de l'extérieur du support (1).

8. Système de levier de commande pour un cycle suivant l'une quelconque des revendications précédentes, dans lequel le support (1) comporte un revêtement extérieur (10) en matière souple.

9. Système de levier de commande suivant l'une quelconque des revendications 1 à 8, dans lequel la pièce de retenue (9) de câble de commande comporte un orifice de retenue qui reçoit et retient, en utilisation, la tête de retenue du câble de commande (8), un orifice de réception de câble pour le passage du câble de commande (8), le dit orifice de réception de câble ayant un diamètre plus petit que celui de l'orifice de retenue et de la tête de retenue; et le support (1) comportant des moyens de maintien (23) d'une butée extérieure (24) pour la gaine extérieure (81) d'un câble de commande (8), lesdits moyens de maintien (23) de gaine de câble de commande étant formés et disposés pour supporter la butée (24) de gaine extérieure, de sorte que la gaine extérieure (81) de câble de commande et le câble de commande (8) dans la gaine puissent s'étendre à l'intérieur du support (1) sensiblement directement vers la base du support à l'endroit de laquelle le support est fixé au guidon (4), afin que, lorsque le dispositif est fixé à une partie de guidon (4) courbe, en utilisation, le câble de commande (8) et la gaine (81) puissent passer de l'intérieur du support directement dans l'intérieur du guidon (4) sans changement brusque de direction sur ce chemin, les dits moyens (23) de maintien de gaine de câble de commande comportant un orifice traversant dans les moyens (23) de maintien de gaine, par lequel le câble de commande (8) passe de la butée extérieure (24) de la gaine (81) vers le levier de commande (5), le dit orifice traversant ayant un diamètre supérieur à celui de la tête de retenue (91) du câble de commande.

10. Système de levier de commande suivant la revendication 9, lorsqu'elle dépend, directement ou directement, de la revendication 2, dans lequel les moyens de maintien de gaine de câble de commande sont prévus sur la pièce d'adaptation (2).

11. Système de levier de commande suivant la revendication 10, dans lequel la pièce d'adaptation est sous la forme d'un élément (23) partant latéralement d'une partie inférieure de ladite partie surélévée (6).

12. Système de levier de commande suivant la revendication 10 ou la revendication 11, dans lequel le dispositif de montage (23) est sous la forme d'une pièce sensiblement en forme de plaque qui est inclinée vers le haut, vers une première extrémité adjacente à la paroi avant (12) du support (1), la partie inclinée vers le haut étant prévue pour supporter la butée (24) de gaine extérieure.

13. Système de levier de commande suivant l'une quelconque des revendications 9 à 12, dans lequel la paroi avant (12) du support (1) comporte un orifice de retenue (15) et la paroi arrière (13) comporte une ouverture (14), le dispositif de montage (23) étant supporté dans le support (1) par engagement avec l'orifice de retenue (15) et l'ouverture (14) de la paroi arrière, de sorte que le serrage des dits moyens de fixation (31-33) bloque la pièce de montage (2) en position par rapport aux parois avant et arrière (12, 13) tout en bloquant le support (1) avec la pièce de montage (2) sur le guidon (4).

14. Système de levier de commande suivant l'une quelconque des revendications 9 à 13, dans lequel le trou traversant (23) des moyens de maintien de gaine de câble de commande est situé à proximité de la paroi avant (12) du support (1), de sorte que la gaine (81) de câble de commande et le câble de commande (8) s'étendent, en utilisation, le long de la surface intérieure de la paroi avant (12) du support (1).

15. Système de levier de commande suivant l'une quelconque des revendications 9 à 14, dans lequel la pièce de retenue de câble de commande est prévue sur un support (9) monté sur le levier de commande (5).

16. Système de levier de commande suivant la revendication 15, dans lequel l'élément support (9) est monté de façon pivotante (91) sur le levier de commande (5).

FIG. I

FIG.2

FIG.3

# FIG. 4

# FIG. 5

# FIG. 6